# FASCICULE DE BREVET EUROPEEN

(11) **EP 3 197 648 B1**
(45) Date de publication et mention de la délivrance du brevet: **23.01.2019**
(21) Numéro de dépôt: 15781387.4
(22) Date de dépôt: 26.09.2015
(51) Int. Cl.: B25J 21/02, B01L 1/04, B08B 15/02

(54) **DISPOSITIF PORTABLE DE CONFINEMENT POUR LA MANIPULATION DE SUBSTANCES BIOLOGIQUES ET/OU CHIMIQUES COMPRENANT ENCEINTE DE CONFINEMENT AMOVIBLE**
TRAGBARES EINDÄMMUNGSVORRICHTUNG ZUR MANIPULATION VON ORGANISCHEN UND/ODER CHEMISCHEN SUBSTANZEN AUFWEISEND ENTFERNBAREN EINDÄMMUNGSBEHÄLTER
PORTABLE CONTAINMENT DEVICE FOR MANIPULATING ORGANIC AND/OR CHEMICAL SUBSTANCES, COMPRISING REMOVABLE CONTAINMENT ENCLOSURE

(30) Priorité: 26.09.2014 FR 1459155; 08.12.2014 FR 1462085
(43) Date de publication de la demande: 02.08.2017
(73) Titulaire: K-Plan, 69100 Villeurbanne (FR)
(72) Inventeur: PARZY, Dominique, 69580 Saint-Cyr-sur-le-Rhône (FR); PARZY, Sébastien, 69006 Lyon (FR); DESMOORT, Cyril, 69400 Villefranche sur Saone (FR)
(74) Mandataire: Osha Liang
(86) Numéro de dépôt international: PCT/FR2015/052570
(87) Numéro de publication internationale: WO 2016/046507

(56) Documents cités:
- FR-A1- 2 312 292
- US-A1- 2008 203 103
- US-A1- 2010 044 372

## Description

La présente invention concerne le domaine technique des dispositifs de confinement tels que les hottes et/ou les boîtes à gants utilisés pour la manipulation de produits chimique et/ou biologiques dans des conditions de confinement garantissant l'intégrité des produits manipulés ainsi que la sécurité du ou des opérateurs. Dans une application préférée, l'invention concerne de tels dispositifs de confinement portables c'est-à-dire pouvant être portés par un adulte seul et présentant une masse inférieure à 30 kilogrammes.

Il est connu des dispositifs de confinement réalisés sous la forme d'une enceinte en matière plastique comprenant des panneaux souple de PVC transparent assemblés pour former une pyramide destinée à être suspendue. Cette pyramide comprend alors une ouverture d'introduction des produits à manipuler ainsi que des gants manchettes soudés à l'une des parois pour permettre la manipulation de produits à l'intérieur de l'enceinte.

Une telle enceinte de confinement permet effectivement la manipulation en toute sécurité de produits toxiques ou dangereux mais présente l'inconvénient de devoir être suspendue pour prendre sa forme pyramidale alors que son fonds souple ne permet pas de poser dans une position stable les récipients contenant les produits à manipuler. Or, il est difficile de trouver une structure de support adaptée à l'accrochage du sommet de la pyramide tout en offrant un support pour le fonds de cette dernière. De plus, la forme pyramidale induit l'existence sur les côtés de zones de moindre hauteur dans lesquelles il est difficile de procéder aux manipulations sans venir au contact des parois. Par ailleurs, les gants intégrés aux parois sont réalisés dans un matériau similaire à celui constitutif de ces dernières et sont généralement trop épais pour permettre la manipulation d'accessoires nécessitant une grande précision comme cela est notamment le cas des systèmes de pipetage. De plus, les gants ne sont pas changeables de sorte que tous les utilisateurs du dispositif doivent utiliser les mêmes gants ce qui n'est ni confortable, ni hygiénique.

Une demande de brevet US20100044372 a proposé une valise de transport formée de deux-demi coquille reliée par des charnières de sorte qu'en position ouverte de la valise les demi-coquilles restent liées et adjacentes au niveau d'un bord longitudinal. La valise de transport est alors utilisée pour stocker en position fermée une enceinte souple de confinement et une structure démontable de support de l'enceinte. Lorsque que l'enceinte de confinement doit être utilisée, la valise est ouverte et placée sur un support de sorte que l'une des demi-coquilles forme un plateau. Ensuite l'enceinte est mise en volume en venant passer des tiges constitutives de la structure porteuse dans des goussets de l'enceinte puis en assemblant les tiges entre elles cette opération requérant une procédure de montage fastidieuse et requérant un certain temps.

Il est donc apparu le besoin d'un dispositif de confinement qui apporte une solution aux inconvénients ci-dessus en offrant une grande facilité de mise en oeuvre ainsi que des conditions de travail compatibles avec les besoins des utilisateurs en fonction de la nature des produits manipulés et des risques induits.

Afin d'atteindre cet objectif, l'invention concerne un dispositif portable de confinement pour la manipulation de substances biologiques et/ou chimiques comprenant :
- une caisse de transport comprenant deux demi-caisses reliées par une structure articulée de manière à être mobile entre une position fermée dans laquelle les demi-caisses sont l'une contre l'autre et définissent un espace de rangement pour la structure articulée au moins et une position ouverte dans laquelle les demi-caisses sont situées à distance l'une de l'autre en étant maintenues verticales par la structure articulée, et dans laquelle les demi-caisses et la structure articulée forme une structure porteuse pour une enceinte de confinement souple,
- et une enceinte de confinement souple amovible en matière plastique en partie au moins transparente destinée à former une chambre d'isolement pliable de forme générale parallélépipédique équipée de moyens d'accès à l'intérieur de la chambre et de moyens de fixation à la structure porteuse, l'enceinte de confinement étant adaptée pour restée fixée à la structure porteuse lorsqu'elle est repliée à l'intérieur de la caisse de transport en position fermée (F) de manière à se déployer ou se déplier automatiquement lorsque la caisse de transport est placée en position ouverte (O).

Un tel dispositif de confinement présente l'avantage d'être facilement transportable sous la forme d'une caisse parallélépipédique de faible volume à l'intérieur de laquelle se trouve tous les éléments nécessaires à la constitution d'une enceinte de confinement présentant une forme et un volume suffisant pour permettre de manipuler confortablement des produits dangereux. En effet, la caisse et la structure articulée qui relie les deux demi-caisses remplissent, d'une part, une fonction de rangement et, d'autre part, une fonction de support et de déploiement de l'enceinte de confinement souple de sorte que cette dernière peut être facilement mise en oeuvre et en volume sans opérations complexes de montage ou d'assemblage. De plus, dans la mesure où les demi-caisses sont, en position déployée ou ouverte de la caisse, distante l'une de l'autre de manière à correspondre à deux faces opposées de l'enceinte de confinement déployée, l'invention permet pour un volume, en position fermée de la caisse, moindre d'obtenir une enceinte de confinent d'un volume équivalent à celui obtenu par le dispositif proposé par la demande US précitée. Par ailleurs, le caractère amovible de l'enceinte de confinement permet son remplacement lorsque sa paroi intérieure a été contaminée ou en cas d'endommagement de ladite enceinte ou des accessoires l'équipant.

Selon une forme de réalisation de l'invention, la structure articulée comprend deux bras pliables qui sont chacun articulés sur les deux demi-caisses à proximité de deux coins opposés et qui comprennent chacun deux segments liés en entre eux par un pivot associé à des moyens de maintien en position dépliée, les segments étant sensiblement alignés. Un tel mode de réalisation de la structure articulée permet d'obtenir simplement et à moindre coût une structure suffisamment rigide pour maintenir l'enceinte de confinement en position dépliée tout en étant légère de manière à rendre facilement transportable l'ensemble plié ou fermé. Selon l'invention, les moyens de maintien en position dépliée peuvent être réalisés de toute manière appropriée et par exemple comprendre deux systèmes de verrou, un au niveau de chaque pivot, adaptés pour se verrouiller lorsque les segments sont alignés. Selon une variante préférée, les moyens de maintien en position sont formés au niveau de chaque pivot par un système de frein qui permet au pivot d'être stable et de ne pas bouger sous le poids propre de la structure et de l'enceinte en toute position, un tel pivot freiné est également appelé charnière à couple.

Selon une caractéristique de l'invention, le dispositif portable de confinement comprend au moins quatre moyens de fixation de l'enceinte de confinement souple sur chaque demi-caisse, chaque moyen de fixation étant formé par une partie mâle ou femelle d'un bouton pression complémentaire d'une autre partie de bouton pression portée par l'enceinte. La mise en oeuvre de boutons pression pour la fixation de l'enceinte de confinement sur la structure porteuse permet des opérations de montage et de démontage simples avec un coût réduit et un bilan de poids particulièrement optimal.

Selon une autre caractéristique de l'invention, l'une moins des demi-caisses comprend un bloc d'alimentation électrique pour des accessoires, le bloc d'alimentation comprenant au moins un connecteur électrique orienté vers l'intérieur de la caisse. La mise en oeuvre d'un tel bloc d'alimentation avec un connecteur orienté vers l'intérieur de la caisse permet une alimentation d'accessoires disposés à l'intérieur de l'enceinte de confinement.

Selon une variante de cette caractéristique, le dispositif portable comprend une source de rayon ultraviolet amovible comprenant un connecteur de raccordement complémentaire de celui du bloc d'alimentation. Une telle source d'ultra violet amovible permet d'assurer une décontamination biologique de l'intérieur de l'enceinte de confinement souple après l'utilisation de cette dernière.

Selon une autre caractéristique de l'invention, le dispositif portable de confinement comprend au moins une source de lumière intégrée dans la structure articulée et adaptée pour éclairer l'intérieur de l'enceinte de confinement souple en étant située à l'extérieur de celle-ci. La mise en oeuvre d'une telle source de lumière intégrée permet d'augmenter le confort d'utilisation de l'enceinte de confinement et de l'ensemble du dispositif portable selon l'invention. La source de lumière intégrée peut être réalisée de toute manière appropriée. Dans une forme préférée mais non exclusive, la source de lumière est réalisée sous la forme d'une ou plusieurs diodes électroluminescentes intégrées dans les bras de la structure articulée et de préférence dans le bras supérieur de manière à assurer un éclairage du haut vers le bas pour limiter l'éblouissement de l'utilisateur manipulant dans l'enceinte souple de confinement.

Selon une caractéristique de l'invention, les demi-caisses présentent une forme générale sensiblement parallélépipédique et sont complémentaires.

Selon une autre caractéristique de l'invention, le dispositif portable présente une masse inférieure ou égale à 25 kg et de préférence inférieure ou égale à 15 kg.

L'invention concerne également le dispositif portable de confinement de l'nvention, comprenant une enceinte de confinement souple en matière plastique en partie au moins transparente destinée à former une chambre d'isolement pliable amovible pour la manipulation de substances biologiques et/ou chimiques destinée à être adaptée dans un dispositif portable selon l'invention, enceinte de confinement de forme générale parallélépipédique équipée de moyens d'accès à l'intérieur de la chambre et de moyens de fixation à une structure porteuse, caractérisée en ce que des moyens d'isolement de fixation sont disposés à proximité deux faces latérale de l'enceinte, à raison d'au moins quatre moyens de fixation à proximité de chaque face et qui comprennent chacun au moins une partie mâle ou femelle d'un bouton pression orienté vers l'extérieur de l'enceinte.

Selon une caractéristique de l'invention, à proximité de chaque face latérale, deux moyens de fixation sont situés sur une face supérieure et deux autres sur une inférieure opposée.

Selon une autre caractéristique de l'invention, chaque partie de bouton pression est sertie ou rivetée sur le matériau constitutif des parois de l'enceinte et l'enceinte comprend au niveau de chaque partie de bouton pression une contre-membrane d'étanchéité fixée sur la face interne de la paroi correspondante. La mise en oeuvre d'une contre membrane d'étanchéité au niveau de chaque partie de bouton pression sertie sur le matériau constitutif des parois permet d'assurer l'étanchéité au niveau des boutons pression et évite les risques d'accroc ou de blessure lors de l'accrochage de l'enceinte de confinement souple sur la structure porteuse du dispositif de confinement, conforme à l'invention, dans lequel elle est destinée à venir s'intégrer.

Selon une autre caractéristique de l'invention, les moyens d'accès à l'intérieur de l'enceinte comprennent sur une face avant deux ouvertures de passage des mains et/ou des avant-bras et sur une face arrière opposée au moins une ouverture d'introduction d'objets dans l'enceinte, ladite ouverture d'introduction étant munie de moyens de fermeture étanche.

Selon une variante de cette caractéristique, les moyens de fermeture étanche de l'ouverture d'introduction comprennent au moins deux glissières de fermeture parallèles s'étendant sur au moins toute la longueur de l'ouverture. La mise en oeuvre de deux glissières permet de garantir l'efficacité et l'étanchéité de la fermeture. Chaque glissière de fermeture est de préférence formée par un rail longitudinal en matière plastique destinée à venir s'engager dans une gorge qui est définie par deux lèvres souples parallèles et qui présente une forme complémentaire de celle du rail longitudinal.

Selon une autre variante de cette caractéristique, les moyens de fermeture étanche comprennent un manchon tubulaire qui s'étend vers l'extérieur de l'enveloppe de confinement en étant, d'une part, fixé de manière étanche au bord périphérique de l'ouverture d'introduction et, d'autre part, pourvu au niveau de son extrémité libre d'au moins une fermeture à glissière, le manchon étant adapté ou configuré pour être roulé en partie sur lui-même autour de la fermeture à glissière. Un tel mode de réalisation permet, d'une part, une bonne étanchéité et, d'autre part, une protection de la fermeture à glissière en évitant son pliage.

Selon une forme de réalisation de l'invention, les moyens de fermeture étanche de l'ouverture d'introduction sont configurés pour former un sas d'introduction comprenant au moins deux fermetures étanches configurées pour être fermées ou ouvertes indépendamment l'une de l'autre, de manière que lorsque l'une est ouverte et l'autre fermée, l'intérieur de la cellule ne communique pas avec le milieu extérieur au travers de l'ouverture d'introduction. La mise en oeuvre d'un tel sas permet de limiter autant que faire se peut la circulation de fluide entre l'intérieur de l'enceinte et le milieu extérieur lors de l'introduction d'objets et notamment d'échantillons à l'intérieur de l'enceinte en cours d'utilisation.

Selon une caractéristique de cette forme de réalisation, les moyens de fermeture étanche de l'ouverture d'introduction comprennent deux manchons tubulaire souples coaxiaux, interne et externe, qui comprennent chacun une extrémité fixée de manière étanche sur le bord périphérique de l'ouverture d'introduction et une extrémité comprenant au moins une fermeture étanche.

Selon une variante de cette caractéristique, la fermeture étanche de l'un au moins des manchons comprend une fermeture à glissière et un système d'attache configuré pour maintenir le manchon correspondant en partie au moins enroulé sur lui-même autour de la fermeture à glissière.

Selon une caractéristique de cette forme de réalisation, l'un des manchons est configuré pour être en partie au moins engagé, lorsqu'il est fermé, dans l'autre manchon. Cette caractéristique permet de limiter l'encombrement, à l'intérieur de la cellule par exemple.

Selon une autre caractéristique de cette forme de réalisation, le sas d'introduction comprend au moins un raccord configuré pour permettre l'injection ou l'aspiration de fluide dans le sas.

Selon encore une autre caractéristique de cette forme de réalisation, le sas d'introduction comprend au moins un conduit d'évent qui raccorde l'intérieur du sas à l'intérieur de l'enceinte et qui comprend un système anti retour adapté pour faire obstacle à une circulation de fluide dans le conduit d'évent de l'intérieur de l'enceinte vers l'intérieur du sas et permettre une circulation de fluide en sens inverse.

Selon une caractéristique de l'invention, les ouvertures de passage sont chacune équipées d'une bague d'adaptation d'une manchette et/ou d'un gant amovible chaque bague étant liée de manière étanche à la paroi correspondante. La mise en oeuvre de telles bagues d'adaptation permet à l'utilisateur de choisir la manière dont il manipule les produits situés à l'intérieur de l'enceinte de confinement en fonction notamment de la dangerosité de ces derniers.

Selon une variante de cette caractéristique, les deux bagues d'adaptation sont adaptées pour s'emboiter l'une dans l'autre. Un tel emboîtement permet de replier sur elle-même l'enceinte de confinement tout en assurant une fermeture de cette dernière de manière à limiter les échanges entre l'intérieur de l'enceinte et le milieu extérieur.

Selon une caractéristique de l'invention, l'enceinte comprend au niveau de la face interne de la paroi supérieure des moyens de fixation d'une lampe. Ces moyens de fixation permettent notamment d'accrocher une lampe à ultraviolet pour assurer une décontamination de l'intérieur de l'enceinte.

Selon une autre caractéristique de l'invention, l'une au moins des parois latérales de l'enceinte comprend une fenêtre de passage d'un bloc de connecteur ou prise électrique. La mise en oeuvre d'une telle fenêtre de passage permet d'assurer le raccordement d'accessoires électriques situés à l'intérieur de l'enceinte et utilisés par l'utilisateur de cette dernière.

Selon une variante de cette caractéristique, la fenêtre de passage est délimitée par une collerette élastiquement déformable adaptée pour épouser le contour du bloc de connecteur. La collerette élastiquement déformable permet alors d'assurer l'étanchéité de l'enceinte au niveau du bloc de connecteur.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives de réalisation d'un dispositif de confinement conforme à l'invention et d'une enceinte de confinement souple amovible selon l'invention destinée à être mis en oeuvre à l'intérieur d'un tel dispositif de confinement.
- La figure 1 est perspective schématique d'une caisse de transport constitutive d'un dispositif portable de confinement selon l'invention, la caisse de transport étant en position fermée.
- La figure 2 est une perspective schématique, en vue de trois-quarts gauche, de la caisse de transports illustrée à la figure 1 en position ouverte.
- La figure 3 est une perspective schématique, en vue de trois-quarts droit, de la caisse de transports illustrée à la figure 1 en position ouverte et équipée d'une enceinte de confinement souple amovible cet ensemble formant le dispositif de confinement selon l'invention.
- La figure 4 est une élévation en vue arrière du dispositif de confinement selon l'invention dans sa configuration illustrée à la figure 3.
- Les figures 5 à 7 sont différentes vues montrant une enceinte de confinement souple amovible constitutif du dispositif de confinement selon l'invention dans sa configuration illustrée aux figures 3 et 4.
- La figure 8 est une coupe schématique montrant un détail constructif de moyens de fixation équipant l'enceinte de confinement souple.
- La figure 9 est une vue en perspective d'un détail du dispositif de confinement selon l'invention.
- La figure 10 et une élévation en vue de face partiellement arrachée du dispositif de confinement selon l'invention tel qu'illustré aux figures 3 et 4.
- La figure 11 est une perspective schématique en vu arrière d'une forme de réalisation de l'enceinte de confinement souple constitutive d'un dispositif de confinement selon l'invention.
- Les figures 12 et 13 sont des perspectives schématiques partielles montrant un détail de réalisation d'un manchon constitutif de l'enceinte souple représentée figure 11.
- La figure 14 est vue de côté d'une variante de réalisation de l'enceinte de confinement souple constitutive d'un dispositif de confinement selon l'invention telle qu'illustrée à la figure 11.
Il est à noter que sur ces figures les éléments structurels et/ou fonctionnels communs aux différentes variantes peuvent présenter les mêmes références.

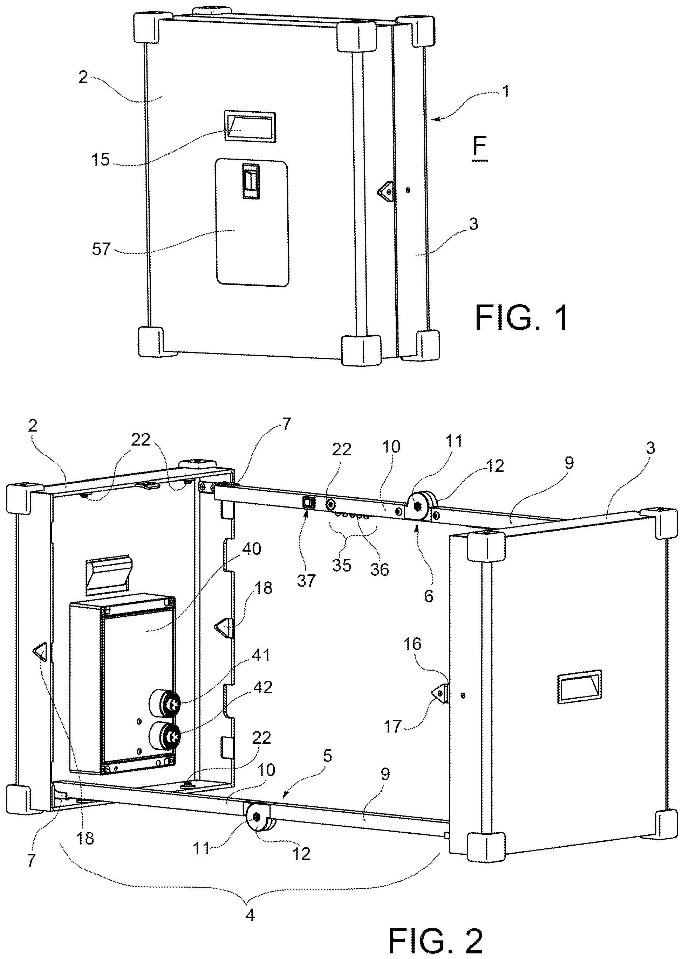

Un dispositif portable de confinement pour la manipulation de substances biologiques et/ou chimiques comprend une caisse de transport 1, illustrée figure 1, formée de deux demi-caisses 2 et 3 qui présentent chacune une forme générale sensiblement parallélépipédique et sont complémentaires pour définir un volume de rangement.

Comme le montre la figure 2, les demi-caisses 2 et 3 sont reliées par une structure articulée 4 de manière à être mobile entre une position fermée F telle qu'illustrée à la figure 1 et une position ouverte O représentée à la figure 2. Selon l'exemple illustré, la structure articulée 4 comprend deux bras pliables 6 et 5 qui sont fixés, par des liaisons pivot 7, au niveau de deux coins opposés de chaque demi-caisses 2,3.

Dans le cas présent, chaque bras pliable 5, 6 comprend deux segments 9, 10 de même longueur qui sont liés entre eux par un pivot 11 associé à des moyens de maintien en position 12 qui sont ici formés par système de freins de sorte que l'ensemble pivot 11 et moyens de maintien 12 constitue une charnière à couple. Les segments 9,10 de chaque bras 5,6 sont en outre liés, au niveau de leurs extrémités opposées au pivot 11, à une demi-caisse 2,3 par le pivot 7 correspondant. Les bras pliables 5 et 6 sont montés de manière à se replier vers l'intérieur de la caisse 1 dans un plan vertical parallèle aux petits cotés verticaux de la caisse.

Chaque demi-caisse 2,3 comprend sur sa face externe une poignée 15 qui facilite la manipulation de la caisse 1 pour son ouverture. Par ailleurs, l'une des demi-caisses, ici la demi-caisse gauche 3 comprend, en tant que moyens de verrouillage de la caisse en position fermée, des languettes élastiques 16, dont une seule est visible à la figure 2. Chaque languette élastique 16 porte un ergot 17 destiné à venir s'engager dans une fenêtre complémentaire 18 aménagée sur l'autre demi-caisse 2. Bien entendu, les moyens de verrouillage pourraient être réalisés de toute autre manière appropriée.

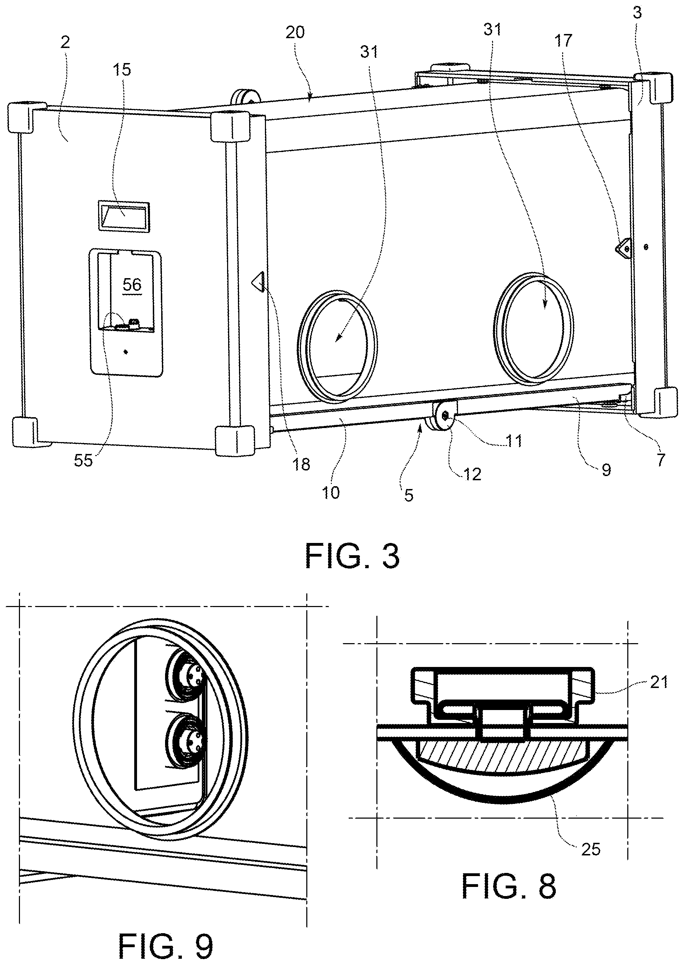

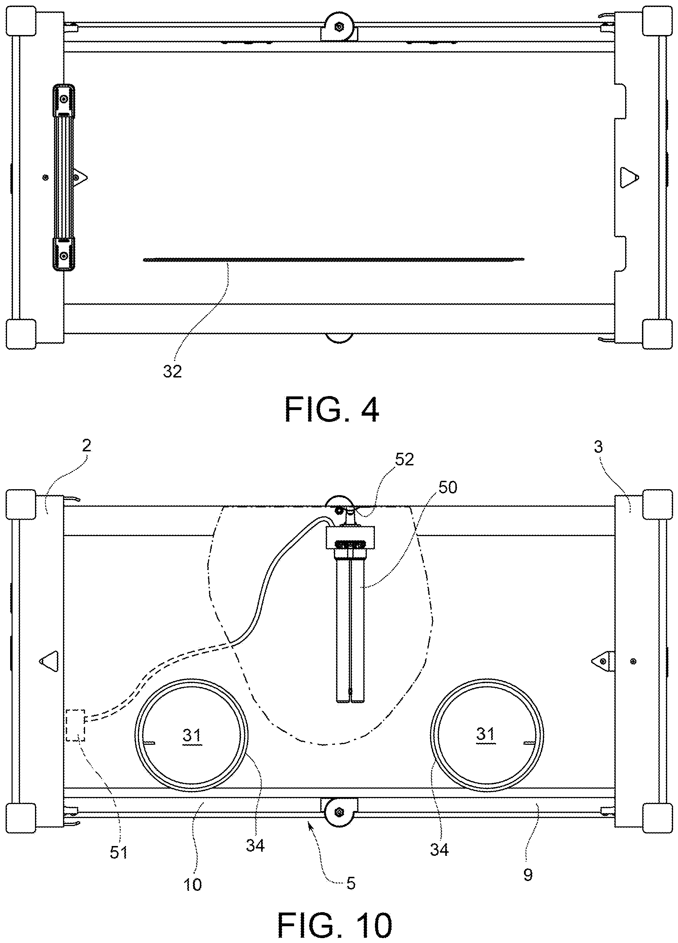

La caisse 1 en position ouverte O avec la structure articulée 4 déployée forme, comme cela ressort des figures 3 et 4, une structure porteuse pour une enceinte de confinement souple 20 qui est fixée de manière amovible sur ladite structure porteuse. Le caractère amovible de l'enceinte de confinement souple 20 permet son remplacement autant que de besoin sans que ce remplacement affecte le reste du dispositif de confinement. Par ailleurs, le caractère souple de l'enceinte de confinement permet de la laisser fixée sur la structure porteuse notamment au niveau des demi-caisses lorsque la structure porteuse est repliée de manière à fermer la caisse en enferment l'enceinte de confinement à l'intérieur. Ainsi, lors de l'ouverture de la caisse et du déploiement de la structure porteuse suivants, l'enceinte de confinement est mise en volume de façon quasi-automatique sans opération fastidieuse de montage de la structure porteuse et de fixation de la l'enceinte de confinement à la structure porteuse.

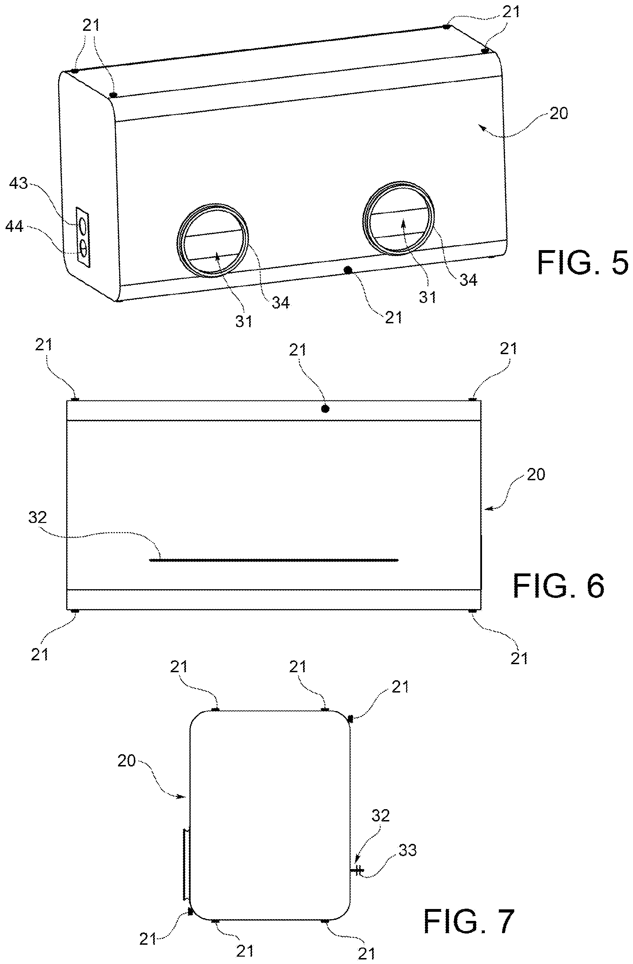

L'enceinte de confinement souple 20, illustrée seule aux figures 5 à 6, présente une forme générale parallélépipédique et se trouve réalisée, dans le cas présent, dans un matériau transparent tel qu'une feuille de PVC étant entendu que tout autre matériau souple adapté pourrait être utilisé. Dans le cas présent, l'enceinte de confinement souple 20 présente une forme générale allongée selon un axe sensiblement horizontal en position d'utilisation de sorte que ses grandes faces sont formées par un même panneau dont les bords extrêmes sont assemblés de manière étanche pour former un tube dont les extrémités sont chacune fermée par un panneau formant une face latérale de l'enceinte, ce panneau étant assemblé de manière étanche aux bords délimitant l'extrémité correspondante du tube.

Afin de permettre une fixation de l'enceinte de confinement 20 à la structure porteuse constituée par la caisse en position ouverte, l'enceinte de confinement 20 comprend des moyens de fixation 21 sur la structure porteuse. Dans le cas présent, les moyens de fixation 21 sont chacun formés par une partie de bouton-pression destinée à coopérer avec une partie complémentaire de bouton-pression 22 portées par la structure porteuse. Ici, les parties de bouton-pression 21 solidaires de l'enceinte de confinement 20 sont des parties femelles tandis que les parties de bouton-pression 22 solidaires de la structure porteuse sont des parties mâles 22 complémentaires des parties femelles 21. Selon l'exemple illustré, l'enceinte de confinement 20 comprend, à proximité de ces faces latérales, quatre moyens de fixation 21 sur la demi-caisse correspondante. Deux moyens de fixation 21 sont alors disposés au niveau de la face supérieure de l'enceinte de confinement 20 pour coopérer avec des moyens complémentaires 22 portées par la face intérieure du panneau latéral supérieur de la demi-caisse correspondante tandis que deux autres moyens de fixation sont disposés sur la face inférieure opposée de l'enceinte de confinement 20 et sont destinés à coopérer avec les moyens de fixation complémentaires portés par le panneau inférieur de la demi-caisse correspondante.

L'enceinte souple 20 comprend en outre au niveau de sa grande face latérale arrière, visible figure 5, un moyen de fixation 21 sur le bras pliable supérieur 6 qui comprend également un moyen de fixation complémentaire 22, visible à la figure 2. L'enceinte souple comprend aussi, au niveau de sa grande face latérale avant lisible figure 4, un moyen de fixation 21 sur le bras pliable inférieur 5 qui comprend un moyen de fixation complémentaire 22 non visible aux figures.

Chaque partie de bouton-pression constitutive des moyens de fixation 21 de l'enceinte de confinement souple 20 est rivetée ou sertie sur le matériau constitutif de ladite enceinte qui comprend alors une contre-membrane d'étanchéité 25 fixée de manière étanche sur la face interne de la paroi correspondante comme le montre la figure 7. Cette contre-membrane 25 garantit une parfaite étanchéité au niveau des moyens de fixation et évite toute altération de cette étanchéité lors des efforts nécessaires à l'insertion des parties femelles de bouton-pression de l'enceinte sur les parties mâles de boutons pression de la caisse 1 et de sa structure articulée 4.

Afin de permettre la manipulation de produits dangereux en son sein alors qu'elle est maintenue déployée par la caisse 1 et la structure articulée 4 en position ouverte O, l'enceinte de confinement 20 présente, en tant que moyens d'accès à l'intérieur de la chambre qu'elle définit, deux ouvertures 31 pour le passage des mains ou des avant-bras disposées sur une face avant et, sur une face arrière, une ouverture 32 d'introduction d'objets dans l'enceinte.

L'ouverture d'introduction 32 est alors munie moyens de fermeture étanche 33 qui selon l'exemple illustré sont formés par deux fermetures à glissière parallèles s'étendant sur toute la longueur de l'ouverture d'introduction 32. Chaque fermeture à glissière est d'un type analogue à celui de la glissière équipant les sacs congélation commercialisés sous la marque Ziplock ®. Bien entendu, les moyens de fermeture étanche pourraient être réalisés d'une autre manière et par exemple mettre en oeuvre des lèvres aimantées.

Les ouvertures 31 sont, dans le cas présent, chacune équipée d'une bague 34 d'adaptation d'une manchette ou d'un gant amovible. Les deux bagues d'adaptation 34 sont de préférence adaptées pour s'emboîter l'une dans l'autre ce qui permet de refermer l'enceinte souple sur elle-même et facilite notamment son repliement à l'intérieur de la caisse 1 en position fermée de cette dernière.

Afin d'assurer l'éclairage de l'intérieur de l'enceinte de confinement 20, la caisse un comprend une source de lumière 35 formée par des diodes électroluminescentes portées par le segment gauche 10 du bras à pliable supérieur 6 comme le montre la figure 2. La source de lumière 35 est ici portée par la face inférieure du segment 10 de manière à limiter l'éblouissement de l'utilisateur lors de la manipulation de produits à l'intérieur de l'enceinte de confinement souple 20. La source de lumière 35 est pilotée par un interrupteur 37 également porté par le segment 10 de manière à pouvoir être actionné depuis l'intérieur de l'enceinte de confinement 20 grâce à la souplesse du matériau qui la constitue.

Afin de permettre l'alimentation d'accessoires électriques à l'intérieur de l'enceinte, la caisse 1 comprend au niveau de la demi-caisse gauche 2 un bloc d'alimentation 40 qui comprend au moins un et, selon l'exemple illustré, deux connecteurs électriques 41, 42 orientés vers l'intérieur de la caisse, comme le montre la figure 2, et donc vers l'enceinte de confinement 20. L'enceinte de confinement 20 comprend alors, au niveau de sa paroi latérale située du côté de la demi-caisse gauche 2, au moins une et selon l'exemple illustré deux fenêtre de passage 43, 44 pour la partie du bloc d'alimentation constitutif des connecteurs électriques 41 et 42. Les fenêtres de passage 43 et 44 sont définies par une collerette élastiquement déformable de manière à épouser les contours du bloc 40 et plus particulièrement des connecteurs 41 et 42 comme le montre la figure 9. La déformation de la collerette élastique permet d'assurer l'étanchéité au niveau du passage des connecteurs 41,42 à l'intérieur de l'enceinte de confinement.

Le dispositif portable de confinement selon l'invention comprend en outre, dans le cas présent, une source de rayons ultraviolets 50 comprenant un connecteur de raccordement 51 complémentaire du connecteur 41 offert par le bloc 40. L'enceinte de confinement comprend alors des moyens d'accrochage 52 aménagés au niveau de la face interne de sa paroi supérieure de manière à permettre une suspension de la source 50 à l'intérieur de l'enceinte 20. Afin de contrôler le temps de fonctionnement de la source de rayons ultraviolets 50, le bloc d'alimentation 40 est équipée d'un système de minuterie 55 accessible depuis l'extérieur de la demi-caisse 1 dans un logement 56 susceptible d'être fermé par une trappe amovible 57. Le logement 56 permet, en outre, le rangement d'un cordon d'alimentation non représenté permettant de raccorder le bloc 40 à une source d'électricité externe. Il doit être noté que le bloc d'alimentation 40 peut aussi comprendre un système de ballast et de starter nécessaire à l'alimentation de la source de rayon ultraviolets 50 dans ce cas le connecteur de raccordement 51 et son connecteur associé 41 sur le bloc d'alimentation 40 sont munis d'un système de détrompage de sorte qu'il n'est pas possible de raccorder un autre connecteur que le connecteur 51 sur le connecteur 41 et que le connecteur 51 ne peut se connecter sur l'autre connecteur 42 du bloc d'alimentation.

Le dispositif de confinement tel qu'ainsi constitué est réalisé de manière à présenter une masse adaptée à son transport par une personne seule et de préférence de manière à présenter masse inférieure à 25 kg et de manière plus particulièrement préférée inférieure à 15 kg.

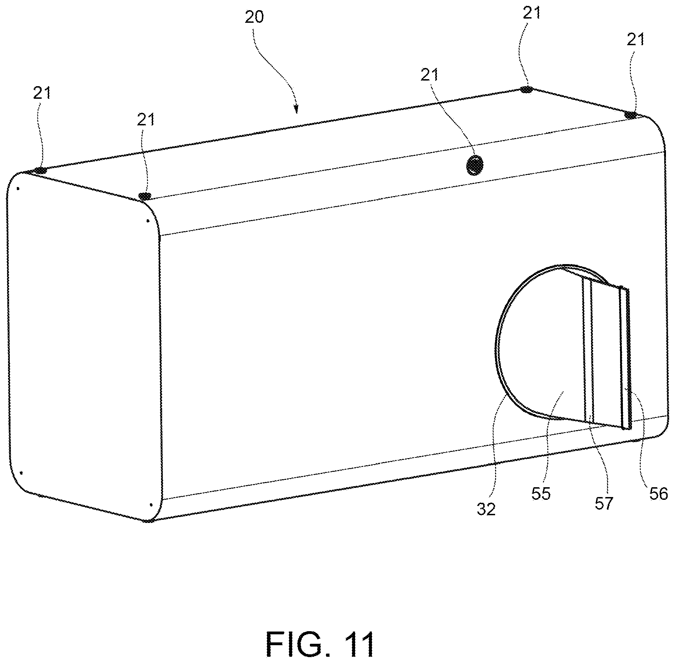

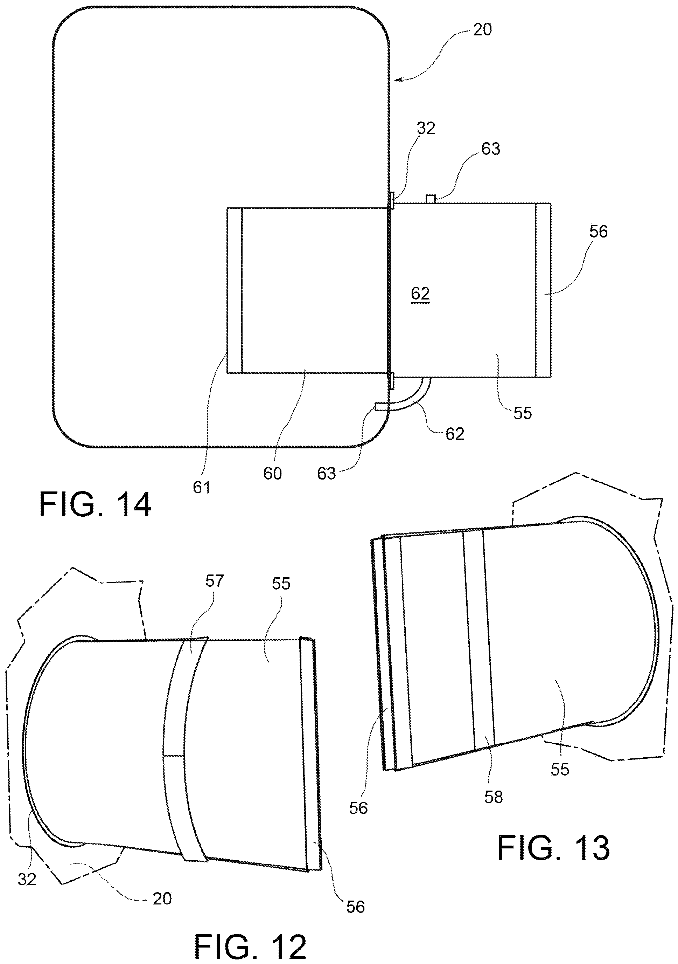

Selon la forme de réalisation décrite précédemment, l'ouverture d'introduction 32 présente la forme d'une fente allongée. Toutefois l'ouverture d'introduction 32 n'est pas nécessairement réalisée de cette manière. Ainsi, selon une autre forme de réalisation de l'invention illustrée figure 11, l'ouverture d'introduction 32 de l'enveloppe de confinement souple 20 se présente sous la forme d'une ouverture sensiblement circulaire dont les moyens de fermeture étanche 33 comprennent un manchon 55 tubulaire souple qui s'étend vers l'extérieur de l'enveloppe de confinement 20 en étant, d'une part, fixé de manière étanche au bord périphérique de l'ouverture d'introduction 32 et, d'autre part, pourvue au niveau de son extrémité libre d'au moins une fermeture à glissière 56 du type de celle décrite précédemment. La fermeture à glissière 56 est disposée de manière à se trouver sensiblement verticale et parallèle aux grandes faces des demi-caisses 2,3 de sorte que lorsqu'elle est fermée cela confère une forme de bec de canard au manchon. Afin de renforcer l'étanchéité, une fois la fermeture à glissière 56 fermée, le manchon 55 peut-être roulé sur lui-même en direction de l'enveloppe souple et être maintenu dans cette position par tous moyens appropriés tels que par exemple une pince ou encore un système d'attache à adhésif ou à crochets tel que par exemple commercialisés sous la marque Velcro®. Ainsi les figures 12 et 13, montrent une bande 57 d'un tissus à crochets portée par une face du manchon 55 et une bande 58 d'un tissus à boucles portée par une autre face du manchon 55 et placée de sorte que lorsque le manchon 55 est partiellement roulé sur lui-même autour de la fermeture 56 les deux bandes coopèrent l'une avec l'autre pour maintenir le manchon 55 roulé. En plus de garantir l'étanchéité, cet enroulement sur lui-même du manchon permet de protéger la fermeture à glissière 56 en évitant un pliage de cette dernière qui serait susceptible de la détériorer.

Les figures 12 à 14 illustrent une variante de la forme de réalisation représentée figure 11. Selon cette variante les moyens de fermeture de l'ouverture d'introduction 32 comprennent en plus du manchon tubulaire externe 55, un manchon tubulaire interne 60 souple sensiblement coaxial au manchon externe 55. Le manchon tubulaire 60 externe s'étend à l'intérieur de l'enceinte 20 en étant fixé de manière étanche, au niveau de l'une de ses extrémités, au bord périphérique de l'ouverture d'introduction 32, tandis que son extrémité libre comprend une fermeture étanche 61 telle qu'une fermeture à glissière comme décrit précédemment. Le manchon interne 60 est sensiblement analogue dans sa constitution et sa mise en en oeuvre au manchon externe 55. Les deux manchons 55 et 60 constituent des moyens de fermeture de l'ouverture d'introduction 32 qui définissent en outre un sas d'introduction 62. En effet, en maintenant fermée l'une des fermetures 56 ou 58, il est possible d'ouvrir l'autre fermeture sans que l'intérieur de la cellule 20 communique avec le milieu extérieur par l'autre ouverture. Cela permet d'introduire et de retirer des objets dans l'enceinte 20 en limitant les risques de contamination.

Selon l'exemple illustré, le manchon interne 60 est configuré pour être engagé dans le manchon externe 55 de manière à libérer l'espace intérieur de l'enceinte 20. A cet effet et selon l'exemple illustré le manchon interne 60 présente un diamètre externe inférieur au diamètre interne du manchon externe 55. Toutefois, les deux manchons peuvent présenter une même taille ou des dimensions identiques. La souplesse du manchon interne étant mise à profit pour l'engager dans le manchon externe.

Par ailleurs, afin de faciliter ce mouvement, il est mis en oeuvre un conduit d'évent 62 qui raccorde l'intérieur du sas 61 à l'intérieur de l'enceinte 20 et qui comprend un système anti retour 63 adapté pour faire obstacle à une circulation de fluide dans le conduit d'évent de l'intérieur de l'enceinte vers l'intérieur du sas et permettre une circulation de fluide en sens inverse. Selon l'exemple illustré, le conduit d'évent 62 est raccordé au sas 62 au manchon externe 55 et à la paroi de l'enceinte souple 20.

De plus, selon l'exemple illustré, il est mis en oeuvre un raccord 63 configuré pour permettre l'injection ou l'aspiration de fluide dans le sas 62 tous en maintenant l'étanchéité de ce dernier lorsque le raccord 63 n'est pas utilisé. Dans le cas présent, le raccord 63 est placé sur le manchon externe 63. Le raccord 63 peut être utiliser pour assurer une décontamination de l'intérieur du sas avant son ouverture pour le passage d'un objet dans un sens ou dans un autre.

Bien entendu, diverses autres variantes de réalisation de la caisse 1 et de l'enveloppe souple 20 constitutives du dispositif de confinement selon l'invention peuvent être envisagées dans le cadre des revendications annexées.

## Revendications

1. Dispositif portable de confinement pour la manipulation de substances biologiques et/ou chimiques comprenant :
- une caisse de transport comprenant deux demi-caisses (2, 3) reliées par une structure articulée (4) de manière à être mobile entre une position fermée (F) dans laquelle les demi-caisses (2, 3) sont l'une contre l'autre et définissent un espace de rangement pour la structure articulée (4) au moins et, une position ouverte (O) dans laquelle les demi-caisses (2,3) sont situées à distance l'une de l'autre en étant maintenues verticale par la structure articulée (4), et dans laquelle les demi-caisses (2, 3) et la structure articulée (4) forme une structure porteuse pour une enceinte de confinement (20) souple,
- et une enceinte de confinement (20) souple amovible en matière plastique en partie au moins transparente destinée à former une chambre d'isolement pliable de forme générale parallélépipédique équipée de moyens d'accès (31,32) à l'intérieur de la chambre et de moyens de fixation (21) à la structure porteuse, l'enceinte de confinement (20) étant adaptée pour restée fixée à la structure porteuse lorsqu'elle est repliée à l'intérieur de la caisse de transport en position fermée (F) de manière à se déployer ou se déplier automatiquement lorsque la caisse de transport est placée en position ouverte.

2. Dispositif portable de confinement selon la revendication précédente, **caractérisé en ce que** la structure articulée (4) comprend deux bras pliables (5.6) qui sont chacun articulés sur les deux demi-caisses (2, 3) à proximité de deux coins opposés et qui comprennent chacun deux segments (9,10) liés en entre eux par un pivot (11) associé à des moyens de maintien (12) en position dépliée, les segments étant sensiblement alignés.

3. Dispositif portable de confinement selon la revendication 1 ou 2, **caractérisé en ce qu'**il comprend au moins quatre moyens de fixation (22) de l'enceinte de confinement (20) souple sur chaque demi-caisse, chaque moyen de fixation (22) étant formé par une partie mâle ou femelle d'un bouton pression complémentaire d'une autre partie de bouton pression (21) portée par l'enceinte.

4. Dispositif portable de confinement selon l'une des revendications 1 à 3, **caractérisé en ce que** l'une au moins des demi-caisses (2, 3) comprend un bloc d'alimentation électrique (40) pour des accessoires, le bloc d'alimentation comprenant au moins un connecteur électrique (41,42) orienté vers l'intérieur de la caisse.

5. Dispositif portable selon la revendication 4, caractérisé en qu'il comprend une source de rayon ultraviolet amovible (50) comprenant un connecteur de raccordement (51) complémentaire de celui du bloc d'alimentation.

6. Dispositif portable de confinement selon l'une des revendications 1 à 5, **caractérisé en ce qu'**il comprend au moins une source de lumière (35) intégrée dans la structure articulée (4) et adaptée pour éclairer l'intérieur de l'enceinte de confinement (20) souple en étant située à l'extérieur de celle-ci.

7. Dispositif portable de confinement selon l'une des revendications 1 à 6, **caractérisé en ce que** les demi-caisses (2, 3) présentent une forme générale sensiblement parallélépipédique et sont complémentaires.

8. Dispositif portable de confinement selon l'une des revendications 1 à 7, **caractérisé en ce qu'**il comprend une enceinte de confinement (20) souple en matière plastique en partie au moins transparente destinée à former une chambre d'isolement pliable amovible pour la manipulation de substances biologiques et/ou chimiques, l'enceinte de confinement (20) étant de forme générale parallélépipédique et équipée de moyens d'accès (31,32) à l'intérieur de la chambre et de moyens de fixation à une structure porteuse, les moyens de fixation sont disposés à proximité deux faces latérale de l'enceinte, à raison d'au moins quatre moyens de fixation (21) à proximité de chaque face et qui comprennent chacun au moins une partie mâle ou femelle d'un bouton pression orienté vers l'extérieur de l'enceinte.

9. Dispositif portable de confinement selon la revendication 8, **caractérisée en ce qu'**à proximité de chaque face latérale deux moyens de fixation (21) sont situés sur une face supérieure et deux autres (21) sur une inférieure opposée.

10. Dispositif portable de confinement selon l'une des revendications 8 ou 9, **caractérisée en ce que** chaque partie de bouton pression (21) est sertie ou rivetées sur le matériau constitutif des paroi de l'enceinte et ce que l'enceinte comprend au niveau de chaque partie de bouton pression une contre-membrane d'étanchéité (25) fixée sur la face interne de la paroi correspondante.

11. Dispositif portable de confinement selon l'une des revendications 8 à 10, **caractérisée en ce que** les moyens d'accès comprennent sur une face avant deux ouvertures (31) de passage des mains et/ou des avant-bras et, sur la face arrière opposée, au moins une ouverture (32) d'introduction d'objet dans l'enceinte munie de moyens de fermeture étanche (33).

12. Dispositif portable de confinement selon la revendication 11, **caractérisé en ce que** les ouvertures de passage (31) sont chacune équipées d'une bague d'adaptation (34) d'une manchette et/ou d'un gant amovible, chaque bague (34) étant liée de manière étanche à la paroi correspondante.

13. Dispositif portable de confinement selon la revendication précédente, **caractérisé en ce que** les deux bagues d'adaptation (34) sont adaptées pour s'emboîter l'une dans l'autre.

14. Dispositif portable de confinement selon l'une des revendications 8 à 13, **caractérisée en ce qu'**elle comprend au niveau de la face interne de la paroi supérieure des moyens (52) de fixation d'une lampe.

15. Dispositif portable de confinement selon l'une des revendications 8 à 14, **caractérisé en ce que** l'une au moins de ses paroi latérales comprend une fenêtre (43) de passage d'un bloc (40) de connecteur ou prise électrique, la fenêtre de passage (43) étant délimitée par une collerette élastiquement déformable adaptée pour épouser le contour d'une partie au moins du bloc de connecteur (40) et assurer l'étanchéité au niveau de ce passage.

## Patentansprüche

1. Tragbare Eindämmungsvorrichtung für die Manipulation von biologischen und/oder chemischen Substanzen, umfassend:
- ein Transportgehäuse umfassend zwei Gehäusehälften (2, 3), die durch eine Gelenkstruktur (4) verbunden sind, um zwischen einer geschlossen Stellung (F), in welcher die Gehäusehälften (2, 3) aneinander liegen und einen Stauraum für wenigstens die Gelenkstruktur (4) bilden, und einer offen Stellung (O), in welcher die Gehäusehälften (2, 3) voneinander beabstandet sind, während sie durch die Gelenkstruktur (4) senkrecht gehalten werden und in welcher die Gehäusehälften (2, 3) und die Gelenkstruktur (4) eine Tragstruktur für einen flexiblen Eindämmungsbehälter (20) bilden, beweglich zu sein,
- und einen flexiblen abnehmbaren Eindämmungsbehälter (20) aus einem wenigstens teilweise transparentem Kunststoff, welcher dazu geeignet ist, einen faltbaren Isolierbehälter von allgemein quaderförmiger Gestalt zu bilden, der mit Zugangsmitteln (31, 32) ins Innere des Behälters und Mitteln (21) zur Befestigung an der Tragstruktur ausgestattet ist, wobei der Eindämmungsbehälter (20) dazu geeignet ist, an der Tragstruktur befestigt zu bleiben, wenn er im Inneren des Transportgehäuses in der geschlossen Stellung (F) zusammengefaltet ist, um sich automatisch auszubreiten oder zu entfalten, wenn das Transportgehäuse in die offen Stellung gebracht wird.

2. Tragbare Eindämmungsvorrichtung nach dem vorangehenden Anspruch, **dadurch gekennzeichnet, dass** die Gelenkstruktur (4) zwei faltbare Arme (5, 6) umfasst, welche jeweils an den zwei Gehäusehälften (2, 3) in der Nähe von zwei gegenüberliegenden Ecken gelenkig angebracht sind und die jeweils zwei Segmente (9, 10) aufweisen, die durch einen mit Haltemitteln (12) verbundenen Zapfen (11) in der ausgeklappten Stellung miteinander verbunden sind, wobei die Segmente im Wesentlichen ausgerichtet sind.

3. Tragbare Eindämmungsvorrichtung nach Anspruch 1 oder 2, **dadurch gekennzeichnet, dass** sie wenigstens vier Befestigungsmittel (22) für den flexiblen Eindämmungsbehälter (20) an jeder Gehäusehälfte umfasst, wobei jedes Befestigungsmittel (22) durch einen männlichen oder weiblichen Teil eines Druckknopfes gebildet ist, der zu einem anderen, von dem Behälter getragenen Teil des Druckknopfes (21) komplementär ist.

4. Tragbare Eindämmungsvorrichtung nach einem der Ansprüche 1 bis 3, **dadurch gekennzeichnet, dass** wenigstens eine der Gehäusehälften (2, 3) einen elektrischen Stromversorgungsanschluss (40) für Zubehör aufweist, wobei der Stromversorgungsanschluss wenigstens einen elektrischen Verbinder (41, 42) umfasst, welcher ins Innere des Gehäuses ausgerichtet ist.

5. Tragbare Eindämmungsvorrichtung nach Anspruch 4, **dadurch gekennzeichnet, dass** sie eine abnehmbare Quelle (50) für ultraviolette Strahlung mit einem Verbindungsstecker (51) umfasst, welcher zu dem des Stromversorgungsanschlusses komplementär ist.

6. Tragbare Eindämmungsvorrichtung nach einem der Ansprüche 1 bis 5, **dadurch gekennzeichnet, dass** sie wenigstens eine Lichtquelle (35) umfasst, die in die Gelenkstruktur (4) integriert ist und dazu geeignet ist, das Innere des flexiblen Eindämmungsbehälters (20) zu beleuchten, wobei sie außerhalb davon angeordnet ist.

7. Tragbare Eindämmungsvorrichtung nach einem der Ansprüche 1 bis 6, **dadurch gekennzeichnet, dass** die Gehäusehälften (2, 3) eine im Wesentlichen allgemein quaderförmige Gestalt aufweisen und komplementär sind.

8. Tragbare Eindämmungsvorrichtung nach einem der Ansprüche 1 bis 7, **dadurch gekennzeichnet, dass** sie einen flexiblen Eindämmungsbehälter (20) aus einem wenigstens teilweise transparentem Kunststoff umfasst, welcher dazu geeignet ist, einen faltbaren abnehmbaren Isolierbehälter für die Manipulation von biologischen und/oder chemischen Substanzen zu bilden, wobei der Eindämmungsbehälter (20) eine allgemein quaderförmige Gestalt hat und mit Zugangsmitteln (31, 32) ins Innere des Behälters und Mitteln zur Befestigung an einer Tragstruktur ausgestattet ist, wobei die Befestigungsmittel in der Nähe von zwei Seitenflächen des Behälters angeordnet sind, wenigstens vier Befestigungsmittel (21) in der Nähe jeder Fläche, und wobei jedes wenigstens einen männlichen oder weiblichen Teil eines Druckknopfes umfasst, der nach außerhalb des Behälters ausgerichtet ist.

9. Tragbare Eindämmungsvorrichtung nach Anspruch 8, **dadurch gekennzeichnet, dass** in der Nähe jeder Seitenfläche zwei Befestigungsmittel (21) an einer Oberseite und zwei andere (21) an einer gegenüberliegenden Unterseite angeordnet sind.

10. Tragbare Eindämmungsvorrichtung nach einem der Ansprüche 8 oder 9, **dadurch gekennzeichnet, dass** jeder Teil des Druckknopfes (21) auf das Material, das die Wände des Behälters bildet, gecrimpt oder genietet ist, und dass der Behälter an jedem Teil eines Druckknopfs eine an der Innenseite der entsprechenden Wand befestigte Gegenabdichtungsmembran (25) aufweist.

11. Tragbare Eindämmungsvorrichtung nach einem der Ansprüche 8 bis 10, **dadurch gekennzeichnet, dass** die Zugangsmittel an einer Vorderseite zwei Öffnungen (31) zum Durchtritt der Hände und/oder Unterarme und an der gegenüberliegenden Rückseite mindestens eine Öffnung (32) zum Einführen des Objekts in den mit Dichtmitteln (33) versehenen Behälter aufweisen.

12. Tragbare Eindämmungsvorrichtung nach Anspruch 11, **dadurch gekennzeichnet, dass** die Durchtrittsöffnungen (31) jeweils mit einem Adapterring (34) für eine Manschette und/oder einen abnehmbaren Handschuh ausgestattet sind, wobei jeder Ring (34) fest mit der entsprechenden Wand verbunden ist.

13. Tragbare Eindämmungsvorrichtung nach einem der voranstehenden Ansprüche, **dadurch gekennzeichnet, dass** die zwei Adapterringe (34) ineinander passen.

14. Tragbare Eindämmungsvorrichtung nach einem der Ansprüche 8 bis 13, **dadurch gekennzeichnet, dass** sie an der Innenseite der oberen Wand Befestigungsmittel (52) für eine Lampe umfasst.

15. Tragbare Eindämmungsvorrichtung nach einem der Ansprüche 8 bis 14, **dadurch gekennzeichnet, dass** wenigstens eine der Seitenwände ein Fenster (43) zum Durchführen eines Verbindungsanschlusses (40) oder einer elektrischen Steckdose umfasst, wobei das Durchführungsfenster (43) durch einen elastisch verformbaren Flansch begrenzt ist, der dazu geeignet ist, sich an die Kontur wenigstens eines Teils des Verbindungsanschlusses (40) anzupassen und die Abdichtung der Durchführung sicherzustellen.

## Claims

1. A portable containment device for manipulating organic and/or chemical substances, comprising:
- a transporting case including two half-cases (2, 3) connected by a hinged structure (4) such as to be movable between a closed position (F), in which the half-cases (2, 3) are against one another and define a stowing space for at least the hinged structure (4), and an open position (O), in which the half-cases (2, 3) are spaced apart from one another by being maintained vertical by the hinged structure (4) and in which the half-cases (2, 3) and the hinged structure (4) form a supporting structure for a flexible containment enclosure (20),
- and a plastic, removable and flexible containment enclosure (20) that is at least partially transparent, for forming a generally parallelepiped foldable isolation chamber provided with means (31, 32) for accessing the inside of the enclosure and with means (21) for attachment to the supporting structure, the containment enclosure (20) being adapted to remain fixed to the supporting structure, when it is collapsible inside the transporting case in a closed position (F), in such a way to be uncollapsed or popped up automatically when the transporting case is placed in an open position (O).

2. A portable containment device according to the preceding claim, **characterised in that** the hinged structure (4) comprises two foldable arms (5, 6), which are each formulated on two half-cases (2, 3), close to the two opposite corners and which each comprise two segments (9, 10), connected to each other by a pivot (11) joined to the means for holding (12) in an uncollapsed position, the segments being substantially aligned.

3. A portable containment device according to claim 1 or 2, **characterised in that** it comprises at least four means for fixing (22) the flexible containment enclosure (20) on each half-case, each fixing means (22) being formed by a male or female part of a snap button, additional to another snap button part (21) held by the enclosure.

4. A portable containment device according to claims 1 to 3, **characterised in that** at least one of the half-cases (2, 3) comprises an electrical power supply (40) for accessories, the power supply comprising at least one electrical connector (41, 42) directed towards the inside of the case.

5. A portable device according to claim 4, **characterised in that** it comprises a removable ultraviolet ray source (50) comprising a plug connection (51) additional to that of the power supply.

6. A portable containment device according to one of claims 1 to 5, **characterised in that** it comprises at least one light source (35) integrated in the hinged structure (4) and adapted to light up the inside of the flexible containment enclosure (20), by being located outside of it.

7. A portable containment device according to one of claims 1 to 6, **characterised in that** the half-cases (2, 3) present a substantially rectangular general shape, and are additional.

8. A portable containment device according to one of claims 1 to 7, **characterized in that** it comprises a plastic containment enclosure (20) in part at least transparent, intended to form a foldable isolation chamber for manipulating organic and/or chemical substances, the containment enclosure (20) being of rectangular general shape, equipped with means for access (31, 32) to the inside of the enclosure and means for fixing to a supporting structure, the fixing means being positioned close to the two lateral faces of the enclosure, at a rate of at least four fixing means (21) close to each face and which each comprise at least one male or female part of a snap button directed towards the outside of the enclosure.

9. A portable containment device according to claim 8, **characterised in that** close to each lateral face, two fixing means (21) are located on an upper face and two others (21) on an opposite lower face.

10. A portable containment device according to one of claims 8 or 9, **characterised in that** each snap button part (21) is crimped or riveted on the material constituting the walls of the enclosure and **in that** the enclosure comprises, on each snap button part, a watertight sealing membrane (25) fixed on the internal face of the corresponding wall.

11. A portable containment device according to one of claims 8 to 10, **characterised in that** the access means comprise on a front face, two openings (31) for passing through hands and/or forearms and, on the opposite rear face, at least one opening (32) for introducing an object into the enclosure, equipped with watertight closing means (33).

12. A portable containment device according to claim 11, **characterised in that** the passing openings (31) are each equipped with an adapter ring (34) of a sleeve and/or a removable glove, each ring (34) being connected watertight to the corresponding wall.

13. A portable containment device according to the preceding claim, **characterised in that** the two adapter rings (34) are adapted to slot into each other.

14. A portable containment device according to one of claims 8 to 13, **characterised in that** it comprises, on the internal face of the upper wall, means (52) for fixing a lamp.

15. A portable containment device according to one of claims 8 to 14, **characterised in that** at least one of its lateral walls comprises a window (43) for passing through a power supply (40) or power outlet, the passing window (43) being defined by an elastically-deformable collar to mould the edge of at least one part of the power supply (40) and ensure this passage is watertight.
